# EUROPEAN PATENT APPLICATION

(11) **EP 2 653 831 A2**
(43) Date of publication of application: **23.10.2013**
(21) Application number: 13163826.4
(22) Date of filing: 15.04.2013
(51) Int. Cl.: G01C 5/00

(54) **Electronic level**

(30) Priority: 16.04.2012 JP 2012092989
(71) Applicant: Kabushiki Kaisha Topcon, Tokyo (JP)
(72) Inventor: Matsumoto, Tatsuyuki, Tokyo-to, Tokyo (JP); Shoji, Naoki, Tokyo-to, Tokyo (JP); Ishiguro, Yuji, Tokyo-to, Tokyo (JP)
(74) Representative: Jennings, Nigel Robin

(57) **Abstract**

An electronic level (1) for receiving reflected light from a pattern marked on a leveling rod (2) and for determining the height of the sighting position and the distance to the leveling rod (2) comprises an electronic level main unit (3), a sighting optical system (14), accommodated in the electronic level main unit (3), for sighting the leveling rod (2), a line sensor (15) for receiving a part of the reflected light, and a control arithmetic unit (16) for calculating the height of the sighting position and the distance to the leveling rod (2) based on signals from the line sensor (15) and for controlling measurement in a crude measurement mode and a precise measurement mode. The crude measurement mode is initiated by the control arithmetic unit (16) and the measurement mode is changed over to the precise measurement mode by detecting the said pattern based on a photodetection signal from said line sensor (15) by measurement.

## Description

### BACKGROUND OF THE INVENTION

The present invention relates to an electronic level, for converting a pattern image of a leveling rod to an electric signal and for obtaining a sighting height and a distance to the leveling rod from the electric signal thus acquired.

A level is a surveying instrument for measuring an elevation difference. In a conventional type level, an operator sights a leveling rod erected at a target point to be measured by using a telescope, and a numerical value indicated on the leveling rod is read by visual inspection. As a result, there has been a possibility that the operator may erroneously read the scale on the leveling rod.

For the purpose of preventing an error in scale reading of the leveling rod, a new type of electronic level or leveling rod for electronic level has been developed, in which the leveling rod is sighted and a pattern printed is received by a photodetection element. Then, the result is converted to an electric signal, and a position is calculated and is displayed as a numerical value. However, in a pre-stage to determine an elevation difference automatically, the operator must sight the leveling rod for electronic level accurately using the electronic level by visual inspection. Also, the sighting operation must be performed each time the leveling rod for electronic level is moved. As a result, the sighting operation often leads to lower working efficiency.

Further, in the case of a conventional type electronic level, an operator must change over the measurement mode manually from menu, depending on the measurement condition, thus, much time is required and working efficiency is low.

The Japanese Patent Publication Laid-open 6-241791 discloses a leveling rod and an electronic level with function to detect the leveling rod, in which a light is emitted by a driving light emitting means, and the light is reflected by a reflection member of the leveling rod for electronic level. After a rotary driving means is driven and the electronic level is rotated, and after confirming that the reflection light has entered a photodetecting means, focusing operation of an objective lens unit is performed. Then, the reflection light is converted by photo-electric conversion, and a signal is taken by a calculation processing means, and the result of calculation such as an elevation difference and a horizontal distance, etc. are displayed on a display unit by the calculation processing means.

### SUMMARY OF THE INVENTION

It is an object of the present invention to provide an electronic level, by which it is possible to perform measurement easily even in a case where there is no sufficient working space or at a place where it is difficult to perform the sighting operation.

To attain the object as described above, an electronic level according to the present invention comprises an electronic level for receiving a reflection light from a pattern marked on a leveling rod and for determining a height of a sighting position and a distance to the leveling rod, and the electronic level comprises an electronic level main unit, a sighting optical system accommodated in the electronic level main unit and for sighting the leveling rod, a line sensor for receiving a part of the reflection light, and a control arithmetic unit for calculating a height of sighting position and a distance to the leveling rod based on signals from the line sensor and for controlling measurement in a crude measurement mode and a precise measurement mode, wherein the crude measurement mode is initiated by the control arithmetic unit, and the crude measurement mode is changed over to the precise measurement mode by detecting the pattern based on a photodetection signal from the line sensor by measurement.

Also, in the electronic level according to the present invention, the control arithmetic unit detects the leveling rod based on a photodetection signal from the line sensor in the crude measurement mode, and changes to the precise measurement mode by detecting the pattern, and in a case where the leveling rod cannot be detected by the photodetection signal, the precise measurement mode is changed to the crude measurement mode.

Further, in the electronic level according to the present invention, the sighting optical system has an objective lens unit and an ocular lens unit, and the objective lens unit comprises an optical system with deeper depth of field.

Also, the electronic level according to the present invention further comprises an operation unit for carrying out setting and a displaying unit for displaying the measurement result, wherein the operation unit, the display unit, and the ocular lens unit are disposed on an upper surface of the electronic level main unit.

Also, the electronic level according to the present invention further comprises an operation unit for carrying out setting and a display unit for displaying the measurement result, wherein the operation unit, the display unit, the ocular lens unit are disposed on a rear surface portion of the electronic level main unit, and the rear surface portion is rotatable so as to be directed in upward direction.

Further, the electronic level according to the present invention further comprises a laser emitting mechanism for emitting a guide laser beam in parallel to an optical axis of the sighting optical system.

According to the present invention, an electronic level comprises a first optical system including an objective lens, a luminous flux selecting member for selectively allowing a part of luminous fluxes to pass through via the first optical system, an optical member where a interference membrane is formed with the luminous fluxes selecting member arranged at object side focal position or approximately at object side focal position, and selecting a wavelength region of the luminous fluxes passing through the luminous fluxes selecting member depending on a position of the luminous fluxes selecting member, a second optical system for guiding the luminous fluxes to the optical member, and an image pickup element for receiving the light in the wavelength region selected by the optical member. As a result, it is possible to easily acquire an optical spectrum of a specific wavelength in a predetermined wavelength region, and to change the specific wavelength in an easy manner, and to simplify the structure with the reduction of the cost.

Also, according to the present invention, in the electronic level, the control arithmetic unit detects the leveling rod based on a photodetection signal from the line sensor in the crude measurement mode, changes to the precise measurement mode by detecting the pattern, and in a case where the leveling rod cannot be detected by the photodetection signal, the precise measurement mode is changed to the crude measurement mode. As a result, there is no need to manually change the measurement mode each time the measurement is performed, and the working load can be reduced.

Further, according to the present invention, in the electronic level, the sighting optical system has an objective lens unit and an ocular lens unit, and the objective lens unit has an optical system with deeper depth of field. As a result, focusing operation can be omitted or can be simplified, and further, the working load can be reduced and the working time can be shortened.

Also, according to the present invention, the electronic level further comprises an operation unit for carrying out setting and a display unit for displaying the measurement result, wherein the operation unit, the display unit, and the ocular lens unit are disposed on an upper surface of the electronic level main unit. As a result, there is no need to confirm the setting and to verify the measurement result from behind the electronic level main unit, and the measurement can be easily performed in a narrow place without sufficient working space.

Further, according to the present invention, the electronic level further comprises an operation unit for carrying out the setting and a display unit for displaying the measurement result, wherein the operation unit, the display unit, and the ocular lens unit are disposed on a rear surface portion of the electronic level main unit, and the rear surface portion can be rotated so as to be faced in upward direction. As a result, there is no need to confirm the setting and the measurement result from behind the electronic level main unit, and the measurement can be easily performed in a narrow place without sufficient working space.

Also, according to the present invention, the electronic level further comprises a laser emitting mechanism for emitting a guide laser beam in parallel to an optical axis of the sighting optical system. As a result, an operator can easily perform the working procedure by directing the objective lens unit in a direction toward the leveling rod.

### BRIEF DESCRIPTION OF THE DRAWINGS

FIG.1 is a perspective view of an electronic level according to a first embodiment of the present invention;
FIG.2 is a perspective view of the electronic level according to the first embodiment of the present invention;
FIG.3 is a perspective view to explain measurement of a leveling rod by the electronic level;
FIG.4 is a drawing to explain an example of a pattern marked on the leveling rod;
FIG.5 is an approximate block diagram to show an optical system of the electronic level;
FIG.6 is a flowchart to explain measurement by the electronic level according to the first embodiment of the present invention;
FIG.7 is a perspective view of an electronic level according to a second embodiment of the present invention; and
FIG.8 is an approximate block diagram to show an optical system of the electronic level.

### DETAILED DESCRIPTION OF THE PREFERRED EMBODIMENTS

Description will be given below on embodiments of the present invention by referring to the attached drawings.

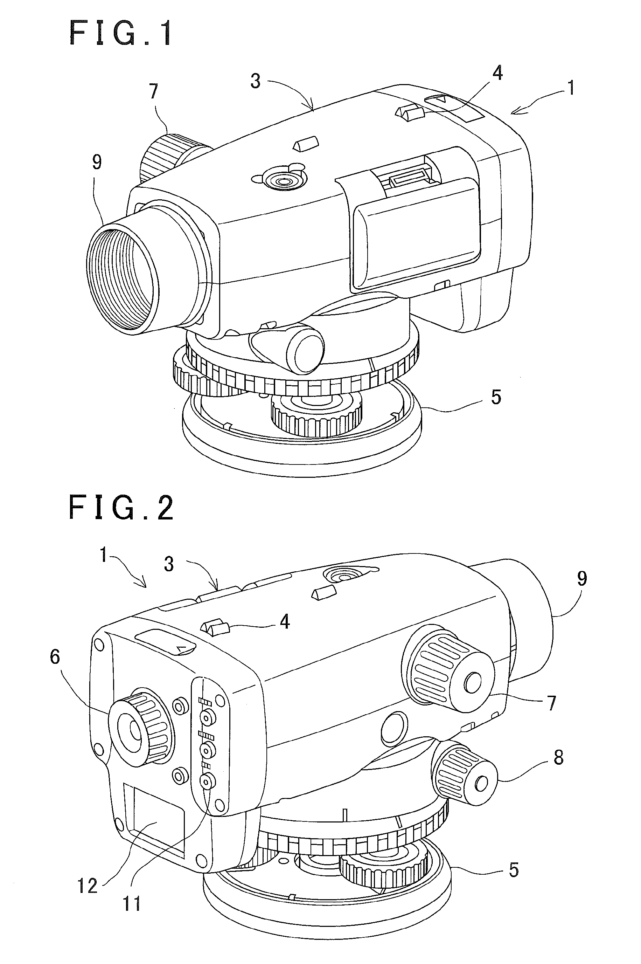

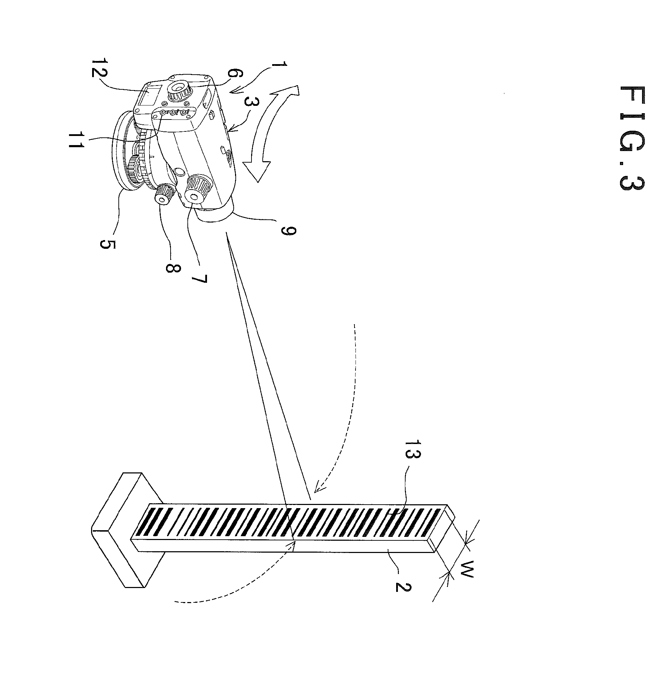

First, by referring to FIG.1 to FIG.3, description will be given on an electronic level 1 and a leveling rod 2 for electronic level in a first embodiment.

The electronic level 1 primarily comprises an electronic level main unit 3, a sighting device (sighter) 4 to sight a target point, a base unit 5 to support the electronic level main unit 3 and to perform leveling, an ocular lens unit 6 for sighting the leveling rod 2 for electronic level at the target point, a focusing knob 7 for performing sighting the target point, a direction adjusting knob 8 for adjusting the sighting direction, an objective lens unit 9 of a telescope where a reflection light from the leveling rod 2 for the electronic level enters, an operation unit 11 where a power switch and a menu button and the like to change over a measurement mode are disposed, a display unit 12 where the present measurement mode, measurement results and the like are displayed.

The operation unit 11 is so arranged that the operation unit 11 can change over various types of modes such as a high-speed continuous measurement mode (a crude measurement mode) to search and capture a pattern of the leveling rod 2 for electronic level by continuously carrying out the crude measurement, a precise single measurement mode for carrying out a precise measurement only once after the pattern is captured, a precise continuous measurement mode (the precise measurement mode) for continuously carrying out the precise measurement, and a precise average mode to display an average value of the precise measurement carried out as many as required as a measurement value on the display unit 12 via the menu button.

In the present embodiment, an optical system with deeper depth of field is used on the objective lens unit 9, a focusing operation is not required by using a fixed focal point or operation can be easily performed by using a mechanism, which can set a stage depending on a distance.

On the leveling rod 2 for electronic level, a predetermined pattern (e.g. a bar code 13) is printed or marked (hereinafter described as "marking") on a straight base, and several types of patterns of the bar code 13 are used as patterns of the bar code to be marked on the base. The leveling rod 2 for electronic level may be designed as convex type where the bar code 13 is marked on a band-like base, which can be wound up.

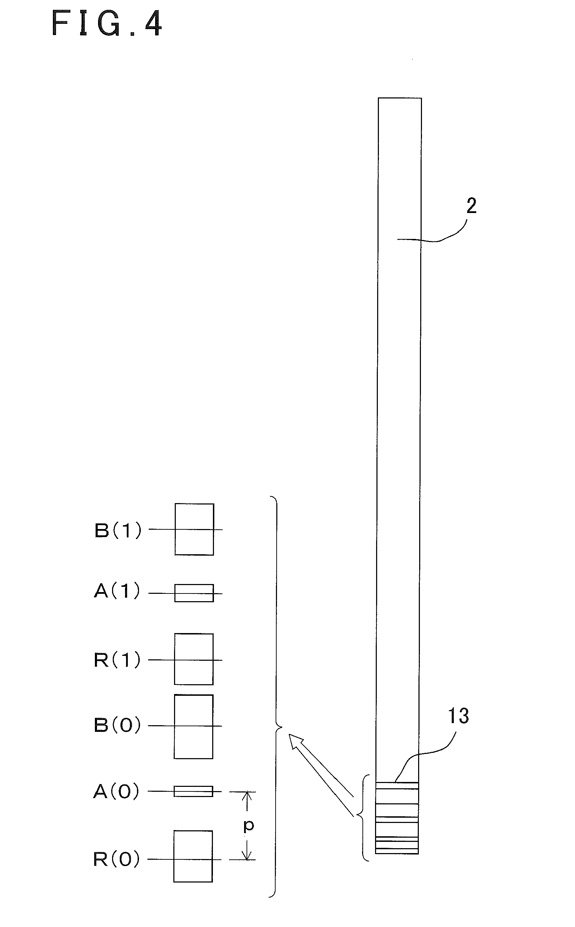

For instance, on the bar code 13, as shown in FIG.4, a first pattern A, a second pattern B and a third pattern R are repeatedly arranged with an equal distance (p). That is, one block is constituted of three types of patterns and each block is continuously formed. If it is defined that a block arranged at the lowest position is O block, and if these are marked as R(O), A(O) and B(O) respectively, these are repeatedly arranged as R(1), A(1), B(1), R(2), A(2), B(2), ····· . Because all patterns are repeatedly arranged at equal distance (p), by regarding a signal corresponding to the distance as a reference signal, sighting height can be acquired according to the reference signal.

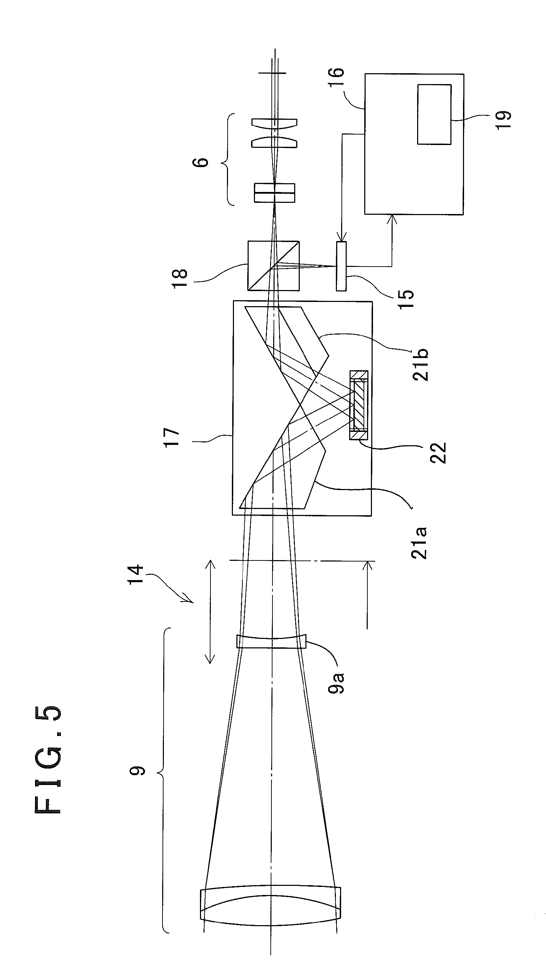

Now, referring to FIG.5, description will be given below on an approximate arrangement of the electronic level 1 according to the present invention.

The electronic level 1 has a sighting optical system 14, a line sensor 15, and a control arithmetic unit 16. Further, the sighting optical system 14 has the objective lens unit 9 including a focusing lens 9a, an automatic correcting unit 17, which is an automatic compensation mechanism for an optical axis, a beam splitter 18, and the ocular lens unit 6.

The beam splitter 18 splits a reflection light from the leveling rod 2 for electronic level entering the sighting optical system 14. One of the light thus split enters the ocular lens unit 6, and the other is received by the line sensor 15.

The control arithmetic unit 16 performs A/D conversion on the reflection light received by the line sensor 15, and reads the signal after A/D conversion and controls an uptake of the signal. The control arithmetic unit 16 processes the signal thus taken up, reads a pattern of the bar code 13, and calculates a height of sighting position and a distance to the leveling rod 2 for electronic level according to the size of the image of the pattern. Also, the control arithmetic unit 16 has a storage unit 19 such as ROM. At the storage unit 19, parameters, data such as constant, operation expression and various types of programs such as a program for performing measurement, a program for changing over the measurement mode, etc. are stored.

The automatic correcting unit 17 has a pair of erect prisms 21a and 21b and a mirror surface member 22, which is suspended in such manner that a reflection surface of the mirror surface member 22 is kept at horizontal position. Therefore, even when an optical axis of the sighting optical system 14 is tilted, by the gravity keeping a reflected light reflected on the horizontal mirror surface member 22, the optical axis of the reflection light projected from the erect prism 21b is maintained in horizontal direction.

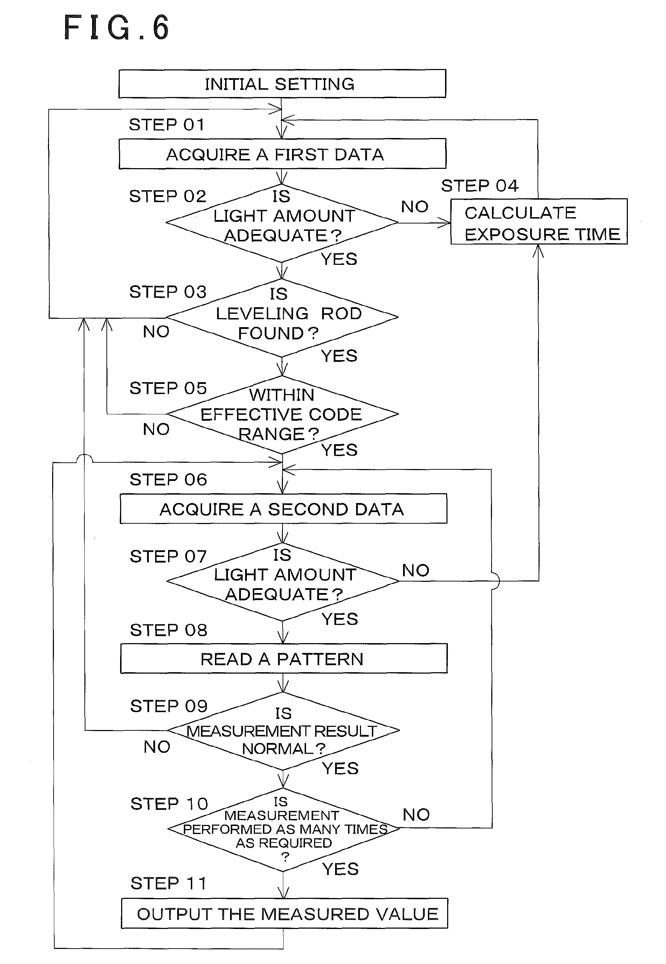

Next, referring to the flowchart shown in FIG.6, description will be given on a measurement using the electronic level 1.

By pressing a power switch of the operation unit 11, a power is turned on. At the electronic level 1 in the present embodiment, when the power is turned on and an initiation of the measurement is inputted, a high-speed continuous measurement mode for automatically repeating a crude measurement is executed, and a searching of the bar code 13 is started in the high-speed continuous measurement mode.

As a pre-stage to start the measurement processing, initial stage setting is performed such as a time interval for executing the crude measurement in the high-speed continuous measurement mode, a time interval to perform a precise measurement in a precise continuous measurement mode, how many times the precise measurement is to be performed, an exposure time of a shutter, and the like. For instance, setting is made in such manner that the precise measurement is performed at a rate of 10 times compared with the case of the crude measurement and the precise measurement is carried out at such time interval that the precise measurement is carried out more than 7 times and the measurement results are obtained.

(Step 01) After the initial setting has been completed, the electronic level main unit 3 is rotated by an operator via the base unit 5 under the condition where the crude measurement is performed. Or, the electronic level 1 is taken up and the objective lens unit 9 is directed toward the leveling rod 2 for electronic level.

In the crude measurement, the high-speed continuous measurement is carried out at a predetermined time interval, e.g. at an interval of 0.1 second. In a process where the crude measurement is performed, the control arithmetic unit 16 monitors a signal from the line sensor 15 and judges whether or not the leveling rod 2 for electronic level has entered within a visual field of the sighting optical system 14. That is, the leveling rod 2 for electronic level is searched electronically according to a signal from the line sensor 15. The operator rotates the electronic level main unit 3, and a reflection light from the leveling rod 2 for electronic level is projected to the line sensor 15. When the control arithmetic unit 16 confirms the presence of the leveling rod 2 for electronic level based on a photodetection signal from the line sensor 15, a first data, which is a data within capturing range including information such as a light amount of the reflection light, is acquired by processing the photodetection signal.

(Step 02) When the first data is acquired, the control arithmetic unit 16 judges whether the photodetection light amount of the first data thus acquired is adequate or not. Here, it is supposed that the electronic level main unit 3 is continuously rotated.

(Step 03) In Step 02, when the light amount in the first data is judged to be adequate, the control arithmetic unit 16 judges whether the bar code 13 is present in the first data (i.e. within capturing range) or not. In a case where the bar code 13 is present in the first data even if slightly, the presence of the bar code 13 is displayed on the display unit 12. Or, by notifying via alarm, it is notified to the operator that the bar code 13 is present in the first data. The operator performs fine adjustment of horizontal angle of the electronic level main unit 3 by using the direction adjusting knob 8 or the like.

(Step 04) In Step 02, when the photodetection light amount of the first data is judged to be not adequate, the control arithmetic unit 16 calculates exposure time of a shutter based on the result of the judgment. After the result of calculation has been reflected in the setting, acquisition of the first data is carried out in Step 01 again, and the photodetection light amount is judged again in Step 02.

(Step 05) In Step 03, when the bar code 13 is detected in the first data, it is judged by the control arithmetic unit 16 as to whether the bar code 13 is present throughout the first data or not, that is, whether the bar code 13 is present within an effective code range W (within the range where the precise measurement can be performed).

In Step 03, when the bar code 13 is judged to be not present in the first data, the operator continues adjustment of horizontal angle of the electronic level main unit 3, and the control arithmetic unit 16 carries out a series of procedures of Step 01 to Step 03 again.

(Step 06) In Step 05, when the bar code 13 is judged to be present within the effective code range, the measurement mode is automatically changed over to the precise continuous measurement mode from the high-speed continuous measurement mode by the control arithmetic unit 16. Further, the control arithmetic unit 16 notifies the operator that the bar code 13 is present within the effective code range by displaying it on the display unit 12 or notifies by means of an alarm different from the alarm of Step 03. The operator recognizes that the bar code 13 is present within the effective code range, and fine adjustment of horizontal angle of the electronic level main unit 3 is stopped. When the measurement mode is changed over by the control arithmetic unit 16, searching of the bar code 13 to continuously execute the crude measurement is stopped, and the precise measurement is performed under the condition that the line sensor 15 holds the bar code 13. By processing the signal outputted from the line sensor 15 to the control arithmetic unit 16 in the precise measurement as in the case of the crude measurement, a second data is acquired, which is data including information such as a light amount of the reflection light.

In Step 05, when the bar code 13 is judged to be not present within the effective code range, a series of procedures of Step 01 to Step 04 are carried out again. The operator performs fine adjustment of horizontal angle of the electronic level 1 until the bar code 13 is detected within the effective code range.

(Step 07) In Step 06, when the second data has been acquired, it is judged by the control arithmetic unit 16 as to whether the photodetection light amount of the second data acquired is adequate or not.

(Step 08) In Step 07, when the light amount of the second data acquired is judged to be adequate, the control arithmetic unit 16 reads a pattern of the bar code 13 and a height of sighting position is calculated, and a distance to the leveling rod 2 for electronic level is calculated from the size of the pattern image of the bar code 13.

In Step 07, when the photodetection light amount of the second data is judged to be not adequate, the control arithmetic unit 16 calculates exposure time of a shutter according to the light amount of the second data acquired in Step 06. After the result of calculation is reflected in the setting, the first data is acquired again in Step 01, and a series of the procedures in Step 02 to Step 06 is carried out again.

(Step 09) In Step 08, when the pattern of the bar code 13 is read, it is then judged whether the measurement result has been normal or not by the control arithmetic unit 16.

(Step 10) In Step 09, when the measurement result is judged to has been normal, it is judged by the control arithmetic unit 16 as to whether the precise measurement has been performed as many times as required in the initial setting.

In Step 09, the case where a distance or a height is judged to has not been measured correctly is as follows, for instance: a case where after the bar code 13 is detected within the effective code range in Step 05 and the measurement mode is changed over to the precise continuous measurement mode, by the fact that horizontal angle of the electronic level main unit 3 is displaced, the electronic level main unit 3 overruns and the bar code 13 goes beyond the effective code range. When the measurement result is judged to be not normal, the control arithmetic unit 16 changes over again the measurement mode from the precise continuous measurement mode to the high-speed continuous measurement mode, and the first data is acquired again in Step 01, and a series of the procedures of Step 02 to Step 08 is carried out again.

(Step 11) In Step 10, when the precise measurement is judged to has been performed as many times as required, an average value of the measurement result of the precise measurement performed as many times as required is calculated by the control arithmetic unit 16, and the average value is displayed on the display unit 12 as the measured value.

In Step 10, when the precise measurement is judged to has not been performed as many times as required, a series of the procedures of Step 06 to Step 09 is repeatedly carried out until the number of the precise measurement performed reaches a required number.

In the case of the electronic level 1 in the present embodiment, a measurement is continued until completion of the measurement is selected in the operation. After the measured value is displayed on the display unit 12, acquisition of the second data is carried out again in Step 06, and each procedure is repeatedly performed until the completion of the measurement is selected by the operation.

As described above, in the present embodiment, when the power is turned on and the initiation of the measurement is inputted, the crude measurement is started automatically. When the operator simply directs the electronic level main unit 3 toward the leveling rod 2 for electronic level and rotates the electronic level main unit 3 in a horizontal direction, the bar code 13 marked on the leveling rod 2 for electronic level is detected by the electronic level main unit 3, and the measurement mode is automatically changed over and the precise measurement is carried out. Therefore, there is no need that the operator manually sets up the measurement mode via the menu button of the operation unit 11 for the purpose of performing the precise measurement. This contributes to the reduction of the working load and to shorten the working time.

Also, it is so arranged that the operator turns the objective lens unit 9 in a direction toward the leveling rod 2 for electronic level, and by simply rotating, the bar code 13 can be detected automatically and the precise measurement is performed. Thus, there is no need for the operator to perform precise sighting operation, and this reduces the working load and shortens the working time.

Because the precise measurement can be performed automatically without the sighting operation by the operator, the measurement can be performed easily in such place where there is no additional space for working and the operator hardly goes into because of the presence of interior fittings and tools, piping, etc. in the building, and this contributes to the improvement of conveniences in the operation of the electronic level 1.

Because the objective lens unit 9 is changed from a conventional optical system to an optical system with deeper depth of field, there is no need to provide auto-focusing function. This makes it possible to reduce the cost and to omit or shorten the procedure of focusing operation and the working load can be further reduced and the working time can be further shortened.

Further, in the present embodiment, by simply turning the power on and to input the initiation of the measurement, the crude measurement is automatically started, and the precise measurement can also be automatically started by detection of the bar code 13. As a result, there is no need to substantially change the mechanical arrangement or circuit arrangement as in the case of conventional type electronic level, and this contributes to the attainment of the procedure at lower cost.

Because the sighting procedure by the operator is not required in the present embodiment, the sighting device 4 for performing sighting may not be used.

Because the width of the leveling rod 2 for electronic level is increased, the bar code 13 can be detected in an easier manner by the electronic level 1, and this contributes to further improvement of working convenience.

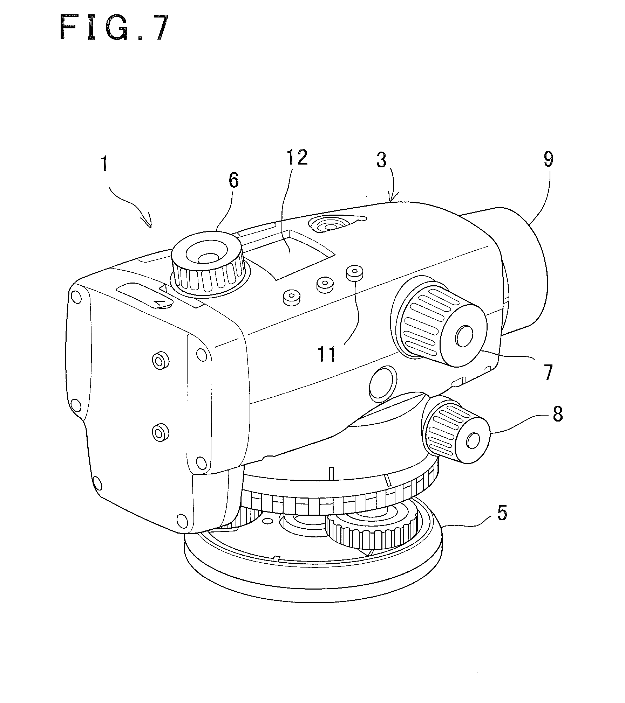

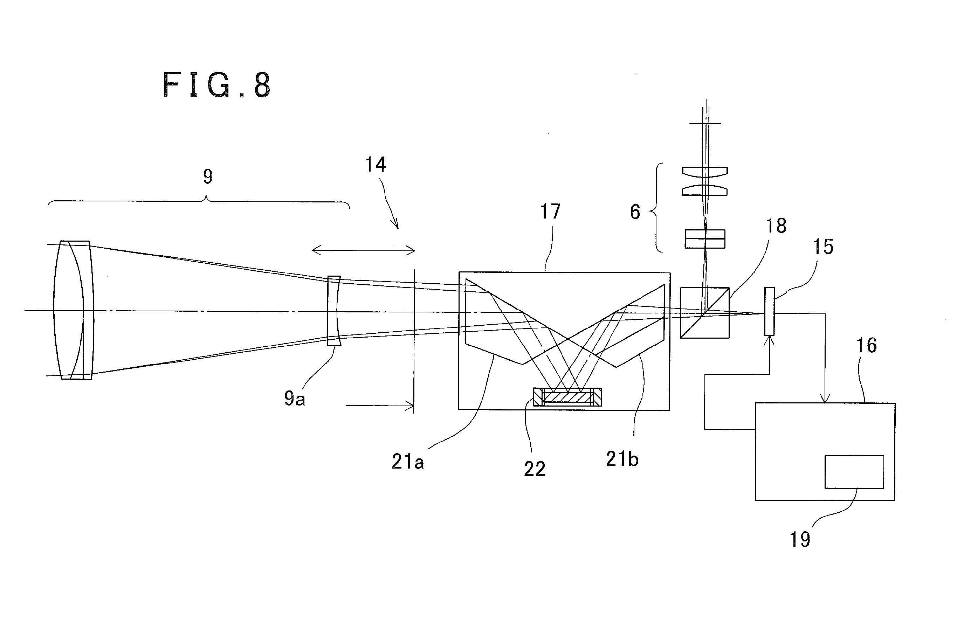

Next, by referring to FIG.7 and FIG.8, description will be given on a second embodiment of the present invention. In FIG.7 and FIG.8, the same component as in FIG.1 or FIG.5 is referred by the same symbol, and detailed description is not given here.

In the case of a electronic level 1 in the second embodiment, an operation unit 11 and a display unit 12 are provided on an upper surface of the electronic level main unit 3 and a part of the reflection light reflected from the leveling rod 2 for electronic level (see FIG.2) is reflected in upward direction by a beam splitter 18, and the light enters an ocular lens unit 6.

In the second embodiment, the electronic level 1 can be operated from above and the measurement result can be confirmed from above. Therefore, there is no need for the operator to perform operation via the operation unit 11, and also, there is no need to confirm the display unit 12 from behind the electronic level 1. This makes it possible to carry out the measurement at such place where there is no space wide enough. This contributes to further improvement of conveniences in the operation of the electronic level 1.

In the second embodiment, the ocular lens unit 6, the operation unit 11, and the display unit 12 are provided on an upper surface of the electronic level main unit 3, while it may be so arranged that the ocular lens unit 6, the operation unit 11 and the display unit 12 are disposed on a rear surface portion of the electronic level main unit 3 similarly to the case of the first embodiment and the rear surface portion is rotatably mounted with respect to the electronic level main unit 3 so that the rear surface portion is faced in upward direction by rotating the rear surface portion.

Also, it may be so arranged that a laser emitting mechanism for emitting a guide laser beam in forward direction is added on the electronic level 1 and the sighting direction can be confirmed by visual inspection, and also, it may be so arranged that the operator can direct the electronic level 1 in a direction toward the leveling rod 2 of the electronic level more easily.

Further, it may also be so arranged that a display device is separately furnished or that the display unit 12 is removably installed, and the acquired data can be transmitted to the display device or the display unit 12 via cable or radio communication so that the operator can confirm the display device or the display unit 12 while taking easier posture.

## Claims

1. An electronic level (1) for receiving a reflection light from a pattern marked on a leveling rod (2) and for determining a height of sighting position and a distance to said leveling rod, comprising an electronic level main unit (3), a sighting optical system (14) accommodated in said electronic level main unit and for sighting said leveling rod, a line sensor (15) for receiving a part of a reflection light, and a control arithmetic unit (16) for calculating a height of sighting position and a distance to said leveling rod based on a signal from the line sensor and for controlling measurement in a crude measurement mode and a precise measurement mode, wherein the crude measurement mode is initiated by said control arithmetic unit, and the measurement mode is changed over to the precise measurement mode by detecting said pattern based on a photodetection signal from said line sensor by measurement.

2. An electronic level (1) according to claim 1, wherein said control arithmetic unit (16) detects said leveling rod (2) based on a photodetection signal from said line sensor (15) in the crude measurement mode and changes to the precise measurement mode by detecting said pattern, and in a case where said leveling rod cannot be detected by the photodetection signal, the measurement mode is changed to the crude measurement mode.

3. An electronic level (1) according to claim 1 or 2, wherein said sighting optical system (14) has an objective lens unit (9) and an ocular lens unit, (6) and said objective lens unit has an optical system with deeper depth of field.

4. An electronic level (1) according to claim 3, further comprising an operation unit (11) for carrying out setting and a display unit (12) for displaying the measurement result, wherein said operation unit, said display unit, and said ocular lens unit (6) are disposed on an upper surface of said electronic level main unit (3).

5. An electronic level (1) according to claim 3, further comprising an operation unit (11) for carrying out setting and a display unit (12) for displaying the measurement result, wherein said operation unit, said display unit, and said ocular lens unit (6) are disposed on a rear surface portion of said electronic level main unit (3) and said rear surface portion is rotatable so as to be directed in upward direction.

6. An electronic level (1) according to one of claims 1 to 5, further comprising a laser emitting mechanism for emitting a guide laser beam in parallel to an optical axis of said sighting optical system (14).
